# EUROPEAN PATENT SPECIFICATION

(11) **EP 4 369 189 B1**
(45) Date of publication and mention of the grant of the patent: **25.03.2026**
(21) Application number: 22866597.2
(22) Date of filing: 06.09.2022
(51) Int. Cl.: G06F 9/451, G06F 8/61, G06F 8/76

(54) **RESOURCE SEARCHING METHOD AND RELATED APPARATUS**
RESSOURCENSUCHVERFAHREN UND ZUGEHÖRIGE VORRICHTUNG
PROCÉDÉ DE RECHERCHE DE RESSOURCES ET APPAREIL ASSOCIÉ

(30) Priority: 09.09.2021 CN 202111058332
(43) Date of publication of application: 15.05.2024
(73) Proprietor: Huawei Technologies Co., Ltd., Shenzhen, Guangdong 518129 (CN)
(72) Inventor: TONG, Shijia, Shenzhen, Guangdong 518129 (CN); CHEN, Youzhi, Shenzhen, Guangdong 518129 (CN)
(74) Representative: Gill Jennings & Every LLP
(86) International application number: PCT/CN2022/117300
(87) International publication number: WO 2023/036134

(56) References cited:
- EP-A2- 0 335 139
- CN-A- 110 399 187
- CN-A- 112 988 300
- CN-A- 112 988 300
- US-A1- 2006 173 840
- US-A1- 2009 112 574

## Description

This application claims priority to Chinese Patent Application No. 202111058332.1, filed with the China National Intellectual Property Administration on September 9, 2021 and entitled "RESOURCE SEARCH METHOD AND RELATED APPARATUS.

### TECHNICAL FIELD

This application relates to the field of electronic technologies, and in particular, to a resource search method and a related apparatus.

### BACKGROUND

With service expansion, applications are gradually internationalized. A same application may be used in a plurality of regions or countries. However, application resources (such as language resources and display resources) used by users in different countries or regions are different. Therefore, to meet user requirements, internationalization operations need to be performed on corresponding application resources of the application used in different countries and regions.

However, in common internationalization operations, a corresponding resource needs to be parsed during running, to obtain a final running result, or a corresponding internationalization resource needs to be obtained through a network. As a result, running time increases, and implementing display of the application is time-consuming. Further, if all resources for all countries and regions are saved, an application installation package is large, and installation and download are slow. This affects user experience.

Chinese patent application CN112988300A provides a method of loading the dictionary file in real time and querying it in the local browser for solving the problem of slow page loading under the multi-language support of computer products.

European patent application EP0335139A2 provides a method of embedding "footprints" and language files in applications for automated translation, to solve the problem of low efficiency of language message management.

United States patent US 2009/112574 A1 provides a method of replacing textual data with mutable code and converting between language packs for solving the problem of memory and translation complexity issues in multilingual interface switching systems.

### SUMMARY

Embodiments of this application provide a resource search method and a related apparatus. A key and a value of an internationalization resource are directly loaded, so that time for parsing the internationalization resource can be reduced during each application startup or application language switch.

According to a first aspect, this application provides a resource search method. The method includes installing, by the electronic device, the first application based on an installation package of the first application, wherein the installation package of the first application comprises a first resource file and a second resource file, data of the first resource file and the second resource file is stored in a mode of a key-value pair, the first resource file provides the first running environment, and the second resource file provides the second running environment; converting, by the electronic device, the first resource file and the second resource file to a key file, a first value file, and a second value file, wherein the key file comprises keys of the first resource file and the second resource file, the first value file comprises a value of the first resource file, the second value file comprises a value of the second resource file; running, by an electronic device, a first application, wherein a current running environment of the first application is the first running environment; determining, by the electronic device, a first key of a display element on a first page of the first application; searching, by the electronic device based on the first running environment, the first value file for a first value corresponding to the first key; displaying, by the electronic device, the first page based on the first value of the display element on the first page; when the electronic device receives a resource switch request, wherein the resource switch request is used to switch from the first running environment to the second running environment; in response to the resource switch request, searching, by the electronic device based on the second running environment, the second value file for a second value corresponding to the first key; and displaying, by the electronic device, the first page based on the second value of the display element on the first page, wherein a first mapping relationship exists between the key file and the first value file, and a second mapping relationship exists between the key file and the second value file.

With reference to the first aspect, in a possible implementation, before that an electronic device runs a first application, the method further includes: The electronic device installs the first application based on an installation package of the first application, where the installation package of the first application includes a first resource file and a second resource file, data of the first resource file and the second resource file is stored in a mode of a key-value pair, the first resource file provides the first running environment, and the second resource file provides the second running environment. The electronic device converts the first resource file and the second resource file to a key file, the first value file, and the second value file, where the key file includes keys of the first resource file and the second resource file, the first value file includes a value of the first resource file, the second value file includes a value of the second resource file, a first mapping relationship exists between the key file and the first value file, and a second mapping relationship exists between the key file and the second value file. A manner in which the electronic device converts the internationalization resource file is specifically described herein. The electronic device separates "key"-"value" key-value pairs of a plurality of resource files in the internationalization resource file, saves keys in the plurality of resource files as one file, and removes a duplicate key. In other words, an internationalization module converts n resource files to one key file and n value files, where the n value files are in a one-to-one correspondence with the n resource files, and each value file includes a value in one resource file. In this way, redundant storage of the keys in the plurality of resource files can be reduced, and a size of the internationalization resource file can be reduced. In addition, when the electronic device installs the first application, internationalization resources in the entire installation package are parsed and converted, and keys and values are separately stored, so that pressure on a memory can be reduced during application resource file conversion performed by the electronic device and startup.

With reference to the first aspect, in a possible implementation, that the electronic device searches, based on the current first running environment, a first value file for a first value corresponding to the first key includes: The electronic device finds a position of the first key in the key file, and further obtains, based on the first mapping relationship, an index value of a value corresponding to the first key in the first value file. The electronic device finds the first value in the first value file based on the index value. A manner in which the electronic device runs the first application based on an after-conversion internationalization resource file is specifically described herein. A key and a value of an internationalization resource are directly loaded, so that time for parsing the internationalization resource can be reduced during each application startup or application language switch.

With reference to the first aspect, in a possible implementation, before that an electronic device runs a first application, the method further includes: The electronic device converts a first resource file and a second resource file to a key file, a first value file, and a second value file with a packaging and compilation tool, where data of the first resource file and the second resource file is stored in a mode of a key-value pair, the first resource file provides the first running environment, the second resource file provides the second running environment, the key file includes keys of the first resource file and the second resource file, the first value file includes a value of the first resource file, the second value file includes a value of the second resource file, a first mapping relationship exists between the key file and the first value file, and a second mapping relationship exists between the key file and the second value file. The electronic device generates an installation package of the first application, where the installation package of the first application includes the key file, the first value file, and the second value file. A manner in which the electronic device converts the internationalization resource file is specifically described herein. The electronic device converts the internationalization resource file in an application compilation phase, to reduce the application installation package without increasing application installation time.

With reference to the first aspect, in a possible implementation, before that an electronic device runs a first application, the method further includes: The electronic device obtains an installation package of the first application, where the installation package of the first application includes a key file, the first value file, and the second value file. That is, the electronic device may directly obtain, from an application market or another device, the internationalization resource file with the separated key-value pair.

With reference to the first aspect, in a possible implementation, that the electronic device searches, based on the current first running environment, a first value file for a first value corresponding to the first key includes: The electronic device obtains the first value file from a server of the first application based on the current first running environment. The electronic device searches the first value file for the first value corresponding to the first key. Herein, the electronic device obtains the internationalization resource file of the first application through a third-party server of the first application. In this case, the electronic device may download the internationalization resource file of the application based on different regions, thereby reducing consumption of file downloading or transmission. In addition, the key-value pair of the internationalization resource file may be separated based on the third-party server of the first application, and the electronic device may directly obtain the internationalization resource file with the separated key-value pair. When the first application is run on an electronic device with limited resources, a problem of system running abnormally of the electronic device caused by excessive occupation of the internationalization resource of the first application is resolved.

In a possible implementation, a data structure level of the first resource file is a first level, a data structure level of the key file is a second level, and a quantity of layers at the second level is less than a quantity of layers at the first level. In this embodiment of this application, a search mapping relationship between a key and a value is established, and a resource file structure is flat, so that a speed of searching for an internationalization target value can be improved, and time for parsing an internationalization resource is reduced during each startup of the first application or during application resource file conversion.

With reference to the first aspect, in a possible implementation, a data structure of each key in the key file includes: an index of the key in a character string, a length of the key, a position of a corresponding value in value.bin, and an index position of a next key node in the key file.

In a possible implementation, an index position in the key file of a next key node of each key in the key file is obtained through hash calculation.

According to a comparative, unclaimed example, this application provides a resource conversion method. The method includes: An electronic device converts a first resource file and a second resource file to a key file, a first value file, and a second value file with a packaging and compilation tool, where data of the first resource file and the second resource file is stored in a mode of a key-value pair, the first resource file provides a first running environment, the second resource file provides a second running environment, the key file includes keys of the first resource file and the second resource file, the first value file includes a value of the first resource file, the second value file includes a value of the second resource file, a first mapping relationship exists between the key file and the first value file, and a second mapping relationship exists between the key file and the second value file. The electronic device generates an installation package of a first application, where the installation package of the first application includes the key file, the first value file, and the second value file.

In this embodiment of this application, the electronic device converts the internationalization resource file in an application compilation phase. The electronic device separates "key"-"value" key-value pairs of a plurality of resource files in the internationalization resource file, saves keys in the plurality of resource files as one file, and removes a duplicate key. In other words, an internationalization module converts n resource files to one key file and n value files, where the n value files are in a one-to-one correspondence with the n resource files, and each value file includes a value in one resource file. In this way, redundant storage of the keys in the plurality of resource files can be reduced, and a size of the internationalization resource file can be reduced, so that a size of the installation package of the application can be reduced without increasing application installation time. In addition, keys and values are separately stored, so that pressure on a memory can be reduced during application resource file conversion performed by the electronic device and startup.

In a possible implementation, after that the electronic device generates an installation package of a first application, the method further includes: The electronic device installs the first application based on the installation package of the first application. The electronic device runs the first application, where a current running environment of the first application is the first running environment. The electronic device determines, based on the key file and the first value file, a display form of a display element on a to-be-displayed page of the first application and displays the to-be-displayed page. When the electronic device receives a resource switch request, where the resource switch request is used to switch from the first running environment to the second running environment. In response to the resource switch request, the electronic device determines, based on the key file and the second value file, the display form of the display element on the to-be-displayed page of the first application and displays the to-be-displayed page. The electronic device runs the first application. The electronic device determines a search path key of a display element on a first page (the to-be-displayed page). If the current running environment of the first application is the first running environment, the electronic device searches the first value file for a value corresponding to the key and displays the first page based on the value. If the current operating environment of the first application is the second operating environment, the electronic device searches the second value file for a value corresponding to the key and displays the first page based on the value. In this embodiment of this application, a key and a value of an internationalization resource are directly loaded, so that time for parsing the internationalization resource can be reduced during each application startup or application language switch.

In a possible implementation, that the electronic device determines, based on the key file and the first value file, a display form of a display element on a to-be-displayed page of the first application and displays the to-be-displayed page includes: The electronic device determines a first key of the display element on the to-be-displayed page of the first application. The electronic device finds a position of the first key in the key file, and further obtains, based on the first mapping relationship, an index value of a value corresponding to the first key in the first value file. The electronic device finds the first value in the first value file based on the index value. The electronic device displays the to-be-displayed page based on the first value. A manner in which the electronic device runs the first application based on an after-conversion internationalization resource file is specifically described herein. A key and a value of an internationalization resource are directly loaded, so that time for parsing the internationalization resource can be reduced during each application startup or application language switch.

In a possible implementation, a data structure level of the first resource file is a first level, a data structure level of the key file is a second level, and a quantity of layers at the second level is less than a quantity of layers at the first level. In this embodiment of this application, a search mapping relationship between a key and a value is established, and a resource file structure is flat, so that a speed of searching for an internationalization target value can be improved, and time for parsing an internationalization resource is reduced during each startup of the first application or during application resource file conversion.

In a possible implementation, a data structure of each key in the key file includes: an index of the key in a character string, a length of the key, a position of a corresponding value in value.bin, and an index position of a next key node in the key file.

In a possible implementation, an index position in the key file of a next key node of each key in the key file is obtained through hash calculation.

According to a third aspect, this application provides an electronic device, including one or more processors and one or more memories. The one or more memories are coupled to the one or more processors. The one or more memories are configured to store computer program code. The computer program code includes computer instructions. When the computer instructions are run on the processor, the electronic device is enabled to perform the resource search method in any possible implementation of any one of the foregoing aspects.

According to a fourth aspect, an embodiment of this application provides a computer storage medium, including computer instructions. When the computer instructions are run on an electronic device, the communication apparatus is enabled to perform the resource search method in any possible implementation of any one of the foregoing aspects.

According to a fifth aspect, an embodiment of this application provides a computer program product. When the computer program product runs on a computer, the computer is enabled to perform the resource search method according to any possible implementation of any one of the foregoing aspects.

### BRIEF DESCRIPTION OF DRAWINGS

FIG. 1 is a schematic diagram of a hardware structure of an electronic device according to an embodiment of this application;
FIG. 2 is a schematic diagram of a group of application scenarios according to an embodiment of this application.
FIG. 3 is a schematic diagram of a software structure of an electronic device according to an embodiment of this application;
FIG. 4 is a flowchart of a resource conversion method according to an embodiment of this application;
FIG. 5 is a flowchart of a resource search method according to an embodiment of this application;
FIG. 6 is a flowchart of another resource conversion method according to an embodiment of this application;
FIG. 7 is a flowchart of another resource conversion method according to an embodiment of this application; and
FIG. 8 is a flowchart of another resource conversion method according to an embodiment of this application.

### DESCRIPTION OF EMBODIMENTS

The following describes technical solutions in embodiments of this application with reference to accompanying drawings. In the descriptions of embodiments of this application, "/" means "or" unless otherwise specified. For example, A/B may represent A or B. In the descriptions, "and/or" describes only an association relationship for describing associated objects and represents that three relationships may exist. For example, A and/or B may represent the following three cases: Only A exists, both A and B exist, and only B exists. In addition, in the descriptions of embodiment of this application, "a plurality of" means two or more.

The following terms "first" and "second" are merely used for description, and shall not be understood as an indication or implication of relative importance or implicit indication of a quantity of indicated technical features. Therefore, features limited by "first" and "second" may explicitly or implicitly include one or more of the features. In the descriptions of the embodiments of this application, unless otherwise specified, "a plurality of" means two or more. The terms "middle", "left", "right", "up", "down", and the like indicate an orientation or a position relationship based on an orientation or a position relationship shown in the accompanying drawings, and are merely intended to facilitate and simplify description of this application. The terms do not indicate or imply that a specified apparatus or element needs to have a specific orientation and be constructed and operated in a specific orientation. Therefore, the terms cannot be understood as a limitation on this application.

The following first describes an electronic device 100 in embodiments of this application.

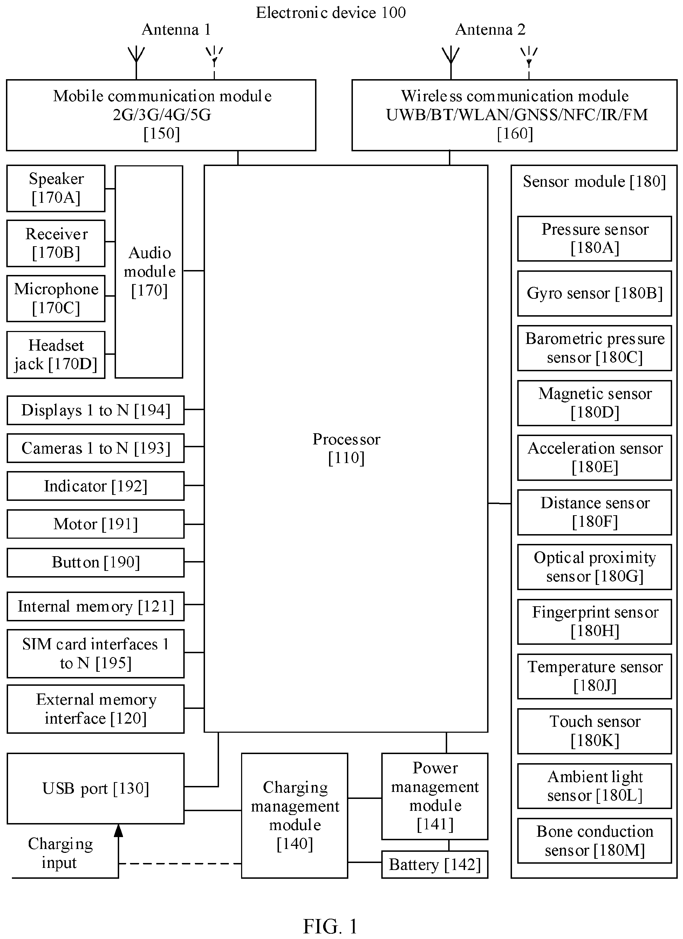

Refer to FIG. 1. FIG. 1 is a schematic diagram of a structure of an electronic device 100 according to an embodiment of this application.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components are combined, some components are split, or a different component arrangement is used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store an instruction or data that has been used or that is cyclically used by the processor 110. If the processor 110 needs to use the instruction or the data again, the processor may directly invoke the instruction or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call with a Bluetooth headset.

The PCM interface may also be used for audio communication, and analog signal sampling, quantization, and coding. In some embodiments, the audio module 170 may be coupled to the wireless communication module 160 through a PCM bus interface. In some embodiments, the audio module 170 may alternatively transfer an audio signal to the wireless communication module 160 through the PCM interface, to implement a function of answering a call with the Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, a UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music with a Bluetooth headset.

The MIPI may be configured to connect the processor 110 to peripheral components such as the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI, or the like.

The USB port 130 is a port that conforms to a USB standard specification, and may be specifically a mini USB port, a micro USB port, a USB Type C port, or the like. The USB port 130 may be configured to connect to a charger to charge the electronic device 100, or may be configured to transmit data between the electronic device 100 and a peripheral device, or may be configured to connect to a headset, to play an audio by using a headset. The port may be further configured to connect to another electronic device like an AR device.

It may be understood that the interface connection relationships between the modules in this embodiment of this application are merely examples for description, and do not constitute a limitation on a structure of the electronic device 100. In some other embodiments of this application, the electronic device 100 may alternatively use an interface connection manner different from those in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be configured to monitor parameters such as a battery capacity, a battery cycle count, and battery health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that is for wireless communication including 2G, 3G, 4G, 5G, or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal to an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then the demodulator transmits the low frequency baseband signal obtained through demodulation to the baseband processor for processing. The low frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and the modem processor and the mobile communication module 150 or another functional module may be disposed in a same device.

The wireless communication module 160 may provide a wireless communication solution that is applied to the electronic device 100 and that includes UWB, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processing module. The wireless communication module 160 receives an electromagnetic wave through the antenna 2, performs processing like frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal to an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include technologies such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, and/or IR. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is used for mathematical and geometric computation, and image rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some embodiments of this application, the display 194 displays interface content currently output by a system. For example, the interface content is an interface provided by an instant messaging application.

The electronic device 100 may implement a photographing function by using the ISP, the camera 193, the video codec, the GPU, the display 194, the application processor, and the like.

The ISP is configured to process data fed back by the camera 193. For example, during photographing, when a shutter is open, light is transmitted to a photosensitive element of the camera through a lens. An optical signal is converted to an electrical signal. The photosensitive element of the camera transmits the electrical signal to the ISP for processing, and converts the electrical signal to a visible image. The ISP may further perform algorithm optimization on noise, luminance, and complexion of an image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal to an electrical signal, and then transmits the electrical signal to the ISP, so that the electrical signal is converted to a digital image signal. The ISP outputs the digital image signal to the DSP for processing. The DSP converts the digital image signal to an image signal in a standard format like RGB or YUV. In some embodiments, the electronic device 100 may include one or N cameras 193, where N is a positive integer greater than 1.

The digital signal processor is configured to process a digital signal, and may process other digital signals other than the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)1, MPEG2, MPEG3, and MPEG4.

An NPU is a neural-network (neural-network, NN) computing processor. The NPU quickly processes input information with reference to a structure of a biological neural network, for example, a transfer mode between human brain neurons, and can continuously perform self-learning. Applications such as intelligent cognition of the electronic device 100, for example, image recognition, facial recognition, speech recognition, and text understanding, may be implemented through the NPU.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 executes various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (like audio data and contacts) and the like created during use of the electronic device 100. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function through the audio module 170, the speaker 170A, the receiver 170B, the microphone 170C, the headset jack 170D, and the application processor.

The audio module 170 is configured to convert digital audio information to an analog audio signal for output, and is also configured to convert an analog audio input to a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal to a sound signal. The electronic device 100 may be configured to listen to music or answer a call in a hands-free mode over the speaker 170A.

The receiver 170B, also referred to as an "earpiece", is configured to convert an electrical audio signal to a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal to an electrical signal. When making a call or sending a voice message, the user may make a sound near the microphone 170C by moving the mouth, to input a sound signal to the microphone 170C. At least one microphone 170C is disposed in the electronic device 100. In some other embodiments, two microphones 170C may be disposed in the electronic device 100, to collect a sound signal and further implement a noise cancellation function. In some other embodiments, three, four, or more microphones 170C may be disposed in the electronic device 100, to collect a sound signal, implement noise cancellation, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal to an electrical signal. In some embodiments, the pressure sensor 180A may be disposed on the display 194. In some optional embodiments of this application, the pressure sensor 180A may be configured to: capture a pressure value generated when a finger part of the user touches the display, and transmit the pressure value to the processor, so that the processor identifies a finger part with which the user enters the user operation.

There are a plurality of types of pressure sensors 180A, such as a resistive pressure sensor, an inductive pressure sensor, and a capacitive pressure sensor. The capacitive pressure sensor may include at least two parallel plates including conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may calculate a touch position based on a detection signal of the pressure sensor 180A. In some embodiments, different touch positions may correspond to different operation instructions. In some optional embodiments, the pressure sensor 180A may further calculate a quantity of touch points based on a detected signal, and transmit a calculated value to the processor, so that the processor recognizes that the user enters a user operation by using a single finger or a plurality of fingers.

The gyro sensor 180B may be configured to determine a motion posture of the electronic device 100. In some embodiments, an angular velocity of the electronic device 100 around three axes (that is, axes X, Y, and Z of the electronic device) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which the lens module needs to compensate, and allows the lens to cancel jitter of the electronic device 100 through reverse motion, to implement image stabilization. The gyro sensor 180B may be further used in a navigation scenario and a motionsensing gaming scenario.

The barometric pressure sensor 180C is configured to measure barometric pressure. In some embodiments, the electronic device 100 calculates an altitude based on a value of a barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell, the electronic device 100 may detect opening and closing of a flip cover based on the magnetic sensor 180D. Further, a feature like automatic unlocking upon opening is set based on a detected opening or closing state of the flip cover or a clamshell.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in applications such as switch between a landscape mode and a portrait mode or a pedometer. In some optional embodiments of this application, the acceleration sensor 180E may be configured to: capture an acceleration value generated when a finger part of the user touches the display (or the finger of the user taps a tail edge of a back housing of the electronic device 100), and transmit the acceleration value to the processor, so that the processor identifies a finger part with which the user enters the user operation.

The distance sensor 180F is configured to measure a distance. The electronic device 100 may measure a distance by using infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects reflected infrared light from a nearby object by using a photodiode. When sufficient reflected light is detected, it can be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off the display for power saving. The optical proximity sensor 180G may also be used in a flip cover mode or a pocket mode to automatically unlock or lock a screen.

The ambient light sensor 180L is configured to sense ambient light brightness. The electronic device 100 may adaptively adjust brightness of the display 194 based on sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of a collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from abnormal shutdown caused by a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is referred to as a "touch screen". The touch sensor 180K is configured to detect a touch operation performed on or near the touch sensor 180K. The touch operation is an operation of touching the display 194 with a hand, an elbow, a stylus, or the like of a user. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from a position of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input to generate a button signal input related to user settings and functional control of the electronic device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, time reminding, information receiving, an alarm clock, and gaming) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100.

Embodiments of this application relate to operations such as search, switch, and running performed on an internationalization resource of an application. The internationalization resource includes different application resources (including a language resource, a display resource, and the like) that are run and that correspond to a same application run in different countries and regions. The electronic device 100 may determine, based on a country or region in which a user is currently located, an application resource that needs to be run currently for an application of the electronic device 100. Alternatively, the electronic device 100 may determine, based on a country or region selected by the user, an application resource that needs to be run currently for the application of the electronic device 100.

For example, a corresponding directory is set for each language environment in the application, and the directory includes a language resource file. If the application supports running in an English language environment and a Chinese language environment, the directory needs to include both English and Chinese language resource files. The language resource file includes a plurality of key-value "key"-"value" pairs. A search path of a display element on each page of the application is "key". A display form of each display element is "value". The electronic device 100 finds a language resource file in a corresponding directory based on a language environment currently set for the application or a system language environment, and then obtains a corresponding value by using a specific key and displays the value to a user in a specific service scenario.

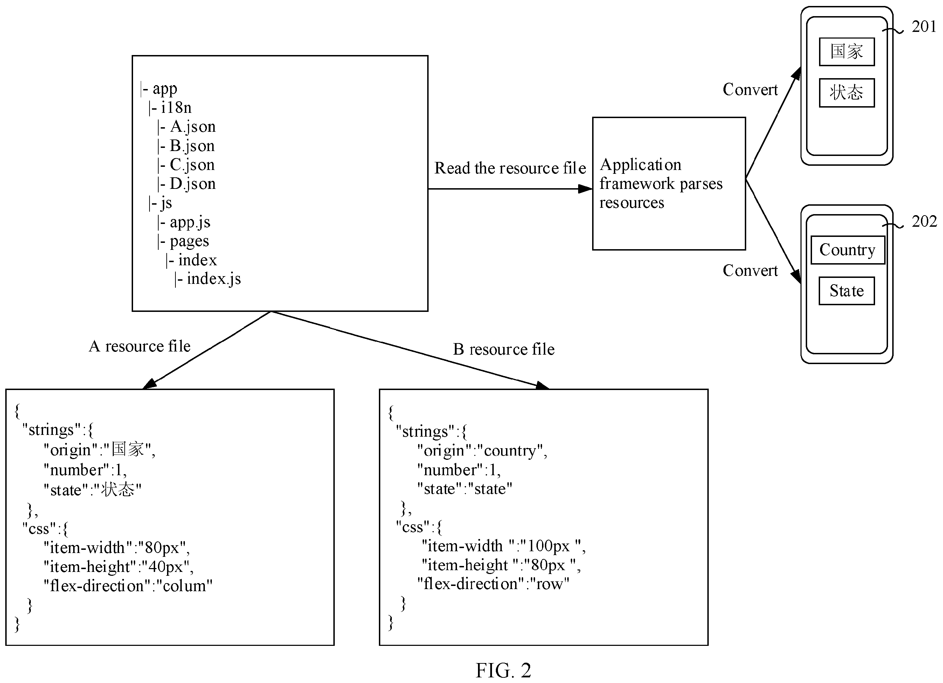

In some scenarios, as shown in FIG. 2, the language resource file of the application includes an A language resource file (A.json) and a B language resource file (B.json). The language resource file includes a plurality of key-value "key"-"value" pairs. For example, in the A language resource file, a key in a pair is "string.origin", and a value corresponding to the key is " 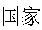 ". A key in another pair is "string.state", and a value corresponding to the key is " 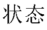 ". For another example, a key in a pair in the B language resource file is "string.origin", and a value corresponding to the key is "country". A key in another pair is "string.state", and a value corresponding to the key is "state".

When an application resource that needs to be run currently for the application of the electronic device 100 is the A language resource file, an application framework reads and parses the A language resource file. The electronic device 100 starts the application, and runs the A language resource file. A language displayed by the electronic device 100 on an application page of the application is a language A. For example, in FIG. 2, " 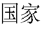 " and " 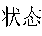 " are displayed on an application page 201 of the electronic device 100 that runs the A language resource file. When the application resource that needs to be run currently by the application of the electronic device 100 is switched to the B language resource file, the application framework reads and parses the B language resource file. The electronic device 100 restarts the application, and runs the B language resource file. The language displayed by the electronic device 100 on an application page of the application is a language B. For example, in FIG. 2, on an application page 202 including a same display element as the application page 201, "country" and "state" are displayed on the application page 202 of the electronic device 100 that runs the B language resource file.

Currently, in some possible implementations, if the electronic device 100 is to switch the application resource of the application, the electronic device 100 needs to restart the application, and parse an application resource that is for switch. The electronic device 100 may read an attribute parameter set in a page node of the application, to obtain a corresponding resource path for page loading; load a corresponding resource file based on the resource path and according to a preset sequence; replace corresponding content with internationalized content; and display an internationalized application page. Specifically, the following steps are included.

Step 1: The electronic device 100 runs the first application. If a first application page of the first application needs to be displayed currently, the electronic device 100 first determines an attribute parameter set in a page node of the first application page. The attribute parameter includes one or more keys, and indicates an internationalization resource file that needs to be loaded by the electronic device 100. The electronic device 100 determines a path of the internationalization resource file of the first application page based on the attribute parameter of the first application page.

Step 2: After determining the path of the internationalization resource file of the first application page, the electronic device 100 obtains a corresponding internationalization resource file (for example, a Chinese language resource file or an English language resource file) based on a language environment of the first application page, and loads the internationalization resource file according to a preset sequence.

Step 3: After successfully loading the internationalization resource file, the electronic device 100 parses content stored in the internationalization resource file to obtain a key-value pair, and stores the key-value pair by using a public Map (where the Map provides an element storage method, and according to the Map, elements are stored in a form of a key-value pair, a duplicate key is not allowed, and a duplicate value for different keys is allowed). A key corresponds to a resource path of a display element in a resource file. A value indicates internationalization content corresponding to the display element in the resource file. The public Map provides a mapping relationship, in which elements are stored in the form of a key-value pair, so that a value can be quickly searched for based on a key. A key in the public Map is unique, and cannot be duplicated.

Step 4: The electronic device 100 obtains a corresponding key and value from the Map based on an attribute parameter of the first application page, and determines content that needs to be displayed on the first application page. The electronic device 100 displays the first application page.

The foregoing steps describe a process of invoking the internationalization resource file when the electronic device 100 runs the first application. When the electronic device 100 invokes the Chinese language resource file, a language displayed in an application interface of the first application is Chinese. When the electronic device 100 invokes the English language resource file, the language displayed in the application interface of the first application is English. If the user wants to switch an application resource run by the first application, for example, switch the display language in an application interface of the first application from Chinese to English, the electronic device 100 parses an application resource that is for switch (the English language resource file), and performs the foregoing step 1 to step 4 again. In this way, switch between different application resources in the first application is implemented.

However, in this manner, during application resource switch of the first application, the electronic device 100 re-parses a resource. As a result, application startup time becomes longer, and user experience is affected. In addition, during installation of the first application, all application resources need to be packaged. In this case, a duplicate key is packaged. Therefore, the installation package of the entire first application is large, and downloading and installing the first application is time-consuming. In addition, if device resources of the electronic device 100 are limited, for example, a memory is insufficient or a processing capability is weak, the internationalization resource cannot be parsed, resulting in abnormal display of the first application page.

In some possible implementations, the electronic device 100 may obtain the internationalization resource file of the first application through a third-party server of the first application, and process an internationalized UI element by using the third-party server of the first application. The electronic device 100 obtains a processed output, and displays a corresponding application page. Specifically, the following steps are included.

Step 1: The electronic device 100 receives an internationalization resource request for the first application, and the electronic device 100 sends a request to the third-party server of the first application based on the internationalization resource request, to obtain the internationalization resource file.

Step 2: In response to the request, the third-party server of the first application determines, based on the internationalization resource file requested by the electronic device 100, a page that needs to be displayed currently by the electronic device 100. The third-party server of the first application processes the internationalized UI element, and provides the electronic device 100 with a UI element that needs to be displayed currently. The electronic device 100 displays, based on the received UI element, the page that needs to be displayed currently.

Optionally, step 2 may be as follows. The electronic device 100 receives the internationalization resource file of the first application, obtains, from the internationalization resource file based on the attribute parameter of the page of the first application that needs to be displayed currently, a corresponding key and value, and determines content that needs to be displayed on the page that needs to be displayed currently. The electronic device 100 processes the internationalized UI element, and displays the page that needs to be displayed currently.

In this way, the size of the installation package of the first application can be reduced, so that less time is spent on downloading and installing the first application. However, the electronic device 100 needs to make a request through a network to obtain a corresponding internationalization resource, and processing cannot be performed offline. In addition, using a capability of another device through a network or Bluetooth leads to increased running time. As a result, implementing display of the first application is time-consuming.

Based on the foregoing two manners, an embodiment of this application further provides an internationalization resource file processing method, to resolve a problem that an internationalization resource file needs to be parsed during each application startup or application resource file switch, which results in long internationalization time.

In this embodiment of this application, the electronic device 100 runs a first application, where an internationalization resource file of the first application is a resource file with a separated key-value pair. The electronic device 100 may separate the key-value pair of the internationalization resource file in a process of installing the first application; or separate the key-value pair of the internationalization resource file in a process of packaging and compiling the first application and generating an installation package of the first application; or obtain the internationalization resource file with the separated key-value pair from another device. This is not limited in this application.

The electronic device 100 runs the first application. The electronic device 100 determines a search path key of a display element on a to-be-displayed page. If a current running environment of the first application is a first running environment, the electronic device 100 searches a first value file for a value corresponding to the key. The electronic device displays the to-be-displayed page based on the value of the display element on the first page. If the current operating environment of the first application is a second operating environment, the electronic device 100 searches a second value file for a value corresponding to the key. The electronic device displays the to-be-displayed page based on the value of the display element on the first page. In this embodiment of this application, a key and a value of an internationalization resource are directly loaded, so that time for parsing the internationalization resource can be reduced during each application startup or application language switch.

The following first describes a block diagram of a software structure of the electronic device 100 according to an embodiment of this application.

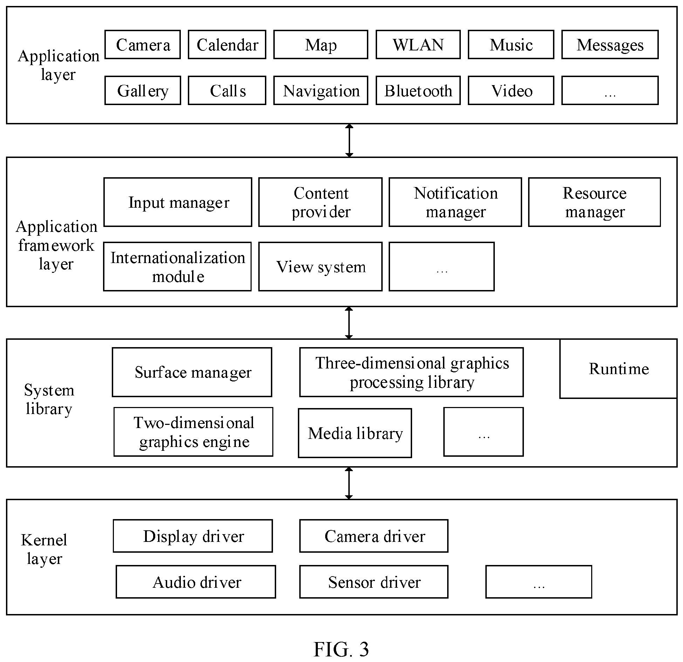

As shown in FIG. 3, software is divided into several layers based on a layered architecture, and the layers implements respective functions. The layers communicate with each other through software interfaces. In some embodiments, an Android system is divided into five layers: an application layer, an application framework layer, an Android runtime (Android runtime) and system library, a hard abstraction layer (hard abstraction layer, HAL) (which is not shown in FIG. 3), and a kernel layer from top to bottom.

The application layer may include various application packages.

As shown in FIG. 3, an application package may include applications such as Camera, Gallery, Calendar, Calls, Map, Navigation, WLAN, Bluetooth, Music, Video, Game, Shopping, Travel, and Instant Messaging (for example, Messages). In addition, the application package may further include system applications such as Home screen (that is, Home), Leftmost screen, Control center, and Notification center.

The application framework layer provides an application programming interface (application programming interface, API) and a programming framework for an application at the application layer. The application framework layer includes some predefined functions.

As shown in FIG. 3, the application framework layer may include an input manager, a window manager (window manager), a content provider, a view system, a phone manager, a resource manager, a notification manager, a display manager, an activity manager (activity manager), an internationalization module, and the like. For ease of description, in FIG. 3, an example in which the application framework layer includes an input manager, a content provider, a notification manager, a view system, a resource manager, and an internationalization module is used for illustration. It should be noted that any two modules of the input manager, the content provider, the notification manager, the view system, the resource manager, and the internationalization module may invoke each other.

The input manager is configured to receive instructions or a request reported by a lower layer like the kernel layer or the hardware abstraction layer.

The content provider is configured to store and obtain data, and enable the data to be accessed by an application. The data may include a video, an image, audio, calls that are made and answered, a browsing history and bookmarks, contacts, and the like.

The view system includes visual controls such as a control for displaying a text and a control for displaying a picture. The view system may be configured to construct an application. A display interface may include one or more views. For example, a display interface including an SMS message notification icon may include a view displaying a text and a view displaying a picture.

The resource manager provides an application with various resources such as a localized character string, an icon, an image, a layout file, a video file, and an application resource file (like json file).

In embodiments of this application, an application resource file includes a plurality of resource files in different running environments. For example, a resource file in a Chinese environment is a Chinese language resource file, and a resource file in an English environment is an English language resource file. Each language resource file includes a plurality of key-value "key"-"value" pairs. A search path of a display element on each page of an application is "key". A display form of each display element is "value". The resource manager provides an application with a corresponding application resource file according to a running environment set for the current application, and the application obtains a corresponding value by using a specific key in a specific service scenario, to display a corresponding application page.

The internationalization module, configured to convert an application resource file to obtain a separated "key"-"value" key-value pair and convert the application resource file to a key file and a value file. Because a service scenario of a same application is fixed, a display element displayed in each running environment of the application is the same, but values corresponding to the display element in different resource files are different. In embodiments of this application, the internationalization module separates "key"-"value" key-value pairs of a plurality of resource files in the application resource file, saves keys in the plurality of resource files as one file, and removes a duplicate key. In other words, the internationalization module converts n resource files to one key file and n value files, where the n value files are in a one-to-one correspondence with the n resource files, and each value file includes a value in one resource file. In this way, redundant storage of the keys in the plurality of resource files can be reduced, and a size of the application resource file can be reduced.

The internationalization module can also be used to parse, search for, and index an application resource file. In embodiments of this application, a separated key and value of an internationalization resource are loaded, so that time for parsing the internationalization resource can be reduced during each application startup or application language switch.

The notification manager enables an application to display notification information in a status bar, and may be used to convey a message of a notification type. The message may automatically disappear after a short stay without user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an alert sound is played, the electronic device vibrates, or an indicator light blinks.

The window manager is configured to manage a window program. The window manager may obtain a size of a display, determine whether there is a status bar, perform screen locking, take a screenshot, and the like. In this application, the window manager is configured to display, when the electronic device 100 meets a preset trigger condition, a window including one or more shortcut controls.

The activity manager is used to manage information and the like of activities that are running in the system, including a process (process), an application, a service (service), and a task (task).

The display manager is configured to transfer display content to the kernel layer.

The phone manager is configured to provide a communication function of the electronic device 100, for example, management of a call status (including answering, declining, or the like).

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run in the virtual machine. The virtual machine executes Java files of the application layer and the application framework layer to obtain binary files. The virtual machine is configured to implement functions such as object lifecycle management, stack management, thread management, security and abnormality management, and garbage collection.

The system library may include a plurality of functional modules, such as a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library can support a plurality of audio and video coding formats such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer HAL is an interface layer between operating system software and a hardware component, and provides an interface for interaction between upper-layer software and lower-layer hardware. The HAL abstracts bottom-layer hardware as software that includes a corresponding hardware interface. Setting of a bottom-layer hardware device can be implemented by accessing the HAL. For example, a related hardware component may be enabled or disabled at the HAL. In some embodiments, a core architecture of the HAL includes at least one of C++ or C.

The kernel layer is a layer between hardware and software. The kernel layer includes at least a display driver, a camera driver, an audio driver, a sensor driver, a touch chip driver, an input (input) system, and the like. For ease of description, FIG. 3 shows an example in which the kernel layer includes an input system, a touch chip driver, a display driver, and a storage driver. The display driver and the storage driver both may be disposed in a driver module.

It may be understood that the structure shown in this embodiment of this application does not constitute a specific limitation on the electronic device 100. In some other embodiments, the electronic device 100 may include more or fewer components than those shown in the figure, or some components are combined, or some components are split, or a different component arrangement is used. The components shown in the figure may be implemented by using hardware, software, or a combination of software and hardware.

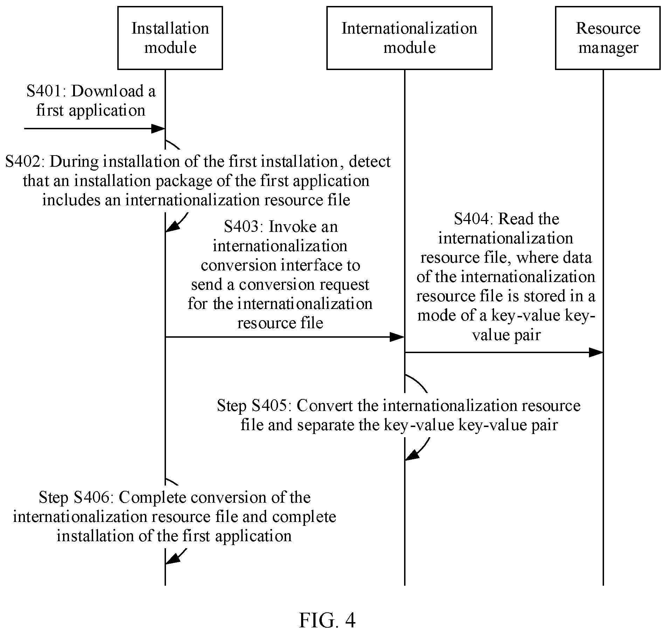

With reference to the foregoing software structure block diagram of the electronic device 100, the following describes a step procedure of an internationalization resource file conversion method provided in this application. As shown in FIG. 4, the method may include the following steps.

Step S401: The electronic device 100 downloads a first application.

The electronic device 100 downloads the first application. The first application is an application that supports internationalization, that is, application resources of the first application include an internationalization resource.

Specifically, the electronic device 100 receives a user operation of downloading the first application. In response to the operation, the electronic device 100 may download the first application from an application market, and obtain an apk file of the first application.

Step S402: The electronic device 100 detects that an installation package of the first application includes an internationalization resource file.

After obtaining the installation package of the first application, the electronic device 100 installs the first application by using an installation module. In a process of installing the first application, the installation module of the electronic device 100 detects that the installation package (the apk file) of the first application includes the internationalization resource file.

The electronic device 100 detects, according to a specific search rule, that the installation package of the first application includes the internationalization resource file. The search rule may be, for example, a specified filename extension, a specified file path, or a preset mapping relationship included in file content. For example, a user specifies a filename extension .json. If the installation package of the first application includes a file of the filename extension, the electronic device 100 determines that the installation package of the first application includes the internationalization resource file, that is, the file of the filename extension is the internationalization resource file.

Step S403: The installation module of the electronic device 100 invokes an internationalization conversion interface to send a conversion request for the internationalization resource file to the internationalization module.

Step S404: The electronic device 100 reads the internationalization resource file, where data of the internationalization resource file is stored in a mode of a key-value pair.

In response to the conversion request for the internationalization resource file, the internationalization module of the electronic device 100 reads the internationalization resource file from a resource manager.

The internationalization resource file includes a plurality of resource files, for example, a Chinese language resource file and an English language resource file. Data of the resource file in the internationalization resource file is stored in a relationship of key-value "key"-"value" pair. Because a service scenario of a same application is fixed, a display element displayed in each running environment of the application is the same, but values corresponding to the display element in different resource files are different.

Step S405: The electronic device 100 converts the internationalization resource file, and separates the key-value pair.

The internationalization module of the electronic device 100 converts the internationalization resource file. The internationalization module of the electronic device 100 separates the "key"-"value" key-value pairs of the plurality of resource files in the internationalization resource file, saves keys in the plurality of resource files as one file, and removes a duplicate key. In other words, the internationalization module converts n resource files to one key file and n value files, where the n value files are in a one-to-one correspondence with the n resource files, and each value file includes a value in one resource file. In this way, redundant storage of the keys in the plurality of resource files can be reduced, and a size of the internationalization resource file can be reduced.

For example, an internationalization resource file before conversion includes a Chinese language resource file (json file) and an English language resource file (json file), and an internationalization resource file after conversion includes a key.bin file, a value.bin file corresponding to the Chinese language resource file, and a value.bin file corresponding to the English language resource file. The key.bin file includes a key of a Chinese language resource file and a key of an English language resource file.

In some embodiments, the internationalization module of the electronic device 100 separates key-value pairs of the n resource files into one key file and n value files. This is an example case. To facilitate file management, search, and indexing, combination or separation may be performed on the n value files to obtain one or more files, and one key file can be separated into a plurality of files.

Optionally, a Chinese language resource file is used as an example. The following shows some example content of the Chinese language resource file before conversion. Data is stored in a relationship of a key-value "key"-"value" pair in the Chinese language resource file. The Chinese language resource file includes:

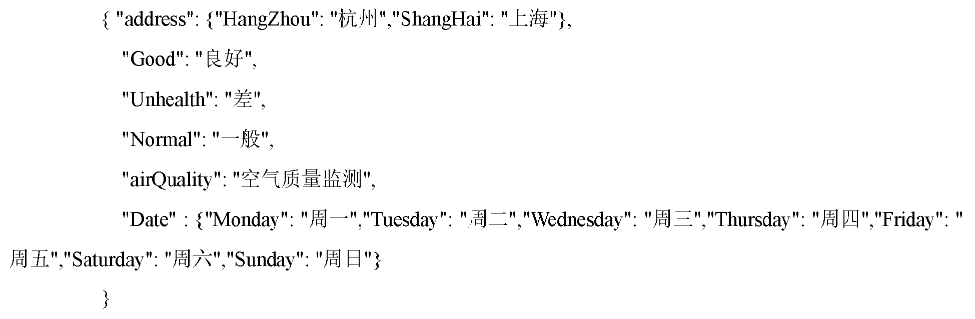

There are a plurality of key-value pairs including "address.HangZhou" (key)-" 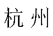 " (value), "address.ShangHai" (key)-" 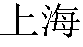 " (value), "Good" (key)-" 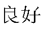 " (value), "Date.Monday" (key)-" 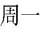 " (value), and the like. Similar to the Chinese language resource file, keys of another language resource files are the same as those of the Chinese language resource file, but corresponding values are different. For example, an English language resource file includes:

```
          { "address": {"HangZhou": "HangZhou ","ShangHai": "ShangHai "},
            "Good": "Good ",
            "Unhealth": "Unhealth ",
            "Normal": "Normal ",
            "airQuality": "airQuality ",
            "Date":{"Monday": "Monday ","Tuesday":
"Tuesday ","Wednesday": "Wednesday ","Thursday":
 "Thursday ","Friday": "Friday ","Saturday": "Saturday "."Sunday": "Sunday "}
          }
```

This section describes two concepts: a child node and a brother node. The child node is a relative concept, and a node that is one level lower than a current node is a child node of the node. For example, the foregoing two nodes ShangHai and HangZhou may be referred to as child nodes of the node of address. The brother node is a node at a same level. For example, the two nodes ShangHai and HangZhou may be referred to as brother nodes, and nodes such as address, Good, Unhealth, Normal and Date may also be referred to as brother nodes.

In some embodiments, the internationalization module of the electronic device 100 converts a plurality of resource files in an application resource file to a corresponding structure, that is, separates a "key"-"value" key-value pair. Based on the Chinese language resource file and the English language resource file shown above, the following shows some example content of a key.bin file after conversion, where the key.bin file includes related information of a keyNode node in the Chinese language resource file and the English language resource file. The key.bin file includes:
address HangZhou ShangHai Good Unhealth Norma lairQuality Date Monday Tuesday Wednesday Thursday Friday Saturday Sunday

It can be learned that the key.bin file includes data of the keyNode node in the Chinese language resource file and the English language resource file that are shown above.

For example, based on the Chinese language resource file shown above, the following shows some example content of an A-value.bin file corresponding to the Chinese language resource file after conversion. The A-value.bin file includes values. For example, the A-value.bin file includes: 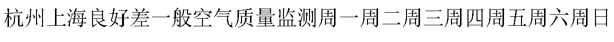

It can be learned that the A-value.bin file includes the value data in the Chinese language resource file shown above.

For example, based on the Chinese language resource file shown above, the following shows some example content of an B-value.bin file corresponding to the English language resource file after conversion. The B-value.bin file includes values. For example, the B-value.bin file includes:
HangZhou ShangHai Good Unhealth Normal airQuality Monday Tuesday Wednesday Thursday Friday Saturday Sunday

It can be learned that, the B-value.bin file includes the value data in the English language resource file shown above.

The electronic device 100 may obtain a corresponding value from a corresponding value.bin file based on a key.bin file.

Optionally, there is a mapping relationship between a key.bin file and a value.bin file. The electronic device 100 performs indexing based on the mapping relationship between a key.bin file and a value.bin file, to determine a value corresponding to each key. A manner of indexing the key.bin file and the value.bin file by the electronic device 100 is related to a preset data structure.

The following shows an example data structure. It should be noted that this does not constitute a limitation on the data structure in this embodiment of this application.

The key.bin file shown above is used as an example. A data structure of each node in the key.bin file may include a value of a key, a type of a next node, an index of a corresponding child node or a corresponding value, and a node offset. The type of a next node indicates whether the next node is a child node of a current node. The node offset is a position offset of a next node of a current node relative to the current node, that is, indicates a position of the next node in the key.bin file.

Specifically, for example, a data structure for the three nodes of address, HangZhou, and ShangHai in the key.bin file includes:
Line 0: address 1 1 -1
Line 1: ShangHai 0 2 2
Line 2: HangZhou 0 1 3

Starting from the line 0, the address in the line 0 is a value of the key; a type of a next node is 1, indicating that the next node is a child node of a current node; an index of the corresponding child node is 1, indicating that the child node is in the line 1; and a brother node offset is -1. In this way, the line 1 is indexed. ShangHai in the line 1 is the value of the key; the type of the next node is 0, indicating that the next node is a node at the same level as the current node; the value 2 indicates an index of a corresponding value in a value.bin file; and the node offset is 2, indicating that the next node is in a line 2. In this way, the line 2 is indexed. Details are not described herein again.

Correspondingly, the A-value.bin file shown above is used as an example. The data structure of each node in the A-value.bin file may include an index of a value in a character string and a length of the value. The index of the value in the character string can be used to determine a start position of the value.

Specifically, for example, a data structure for the two values " 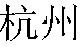 " and " 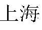 " in the A-value.bin file include:
Line 0: 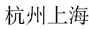 ... (a value character string)
Line 1: 0 6
Line 2: 6 6

The foregoing node ShangHai is used as an example. An index of a value corresponding to ShangHai is 2, that is, the line 2 is indexed, where 6 is an index of the value, and 6 is a length of the value, that is, an offset of six bytes from the 6^{th} byte is the value ( 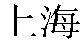 ) corresponding to the key.

In some embodiments, the internationalization module of the electronic device 100 converts the plurality of resource files in the application resource file to corresponding structures. Because the internationalization resource file generally needs only a final value result, a last level in the application resource file is mainly cached herein. In this way, a data structure of the resource file can be flat, and therefore, data search efficiency of the resource file is improved.

Based on the Chinese language resource file and the English language resource file shown above, the following shows some example content of a key.bin file after conversion, where the key.bin file includes related information of a keyNode node in the Chinese language resource file and the English language resource file. The key.bin file includes:
address.HangZhou address.ShangHai Good Unhealth Normal airQuality Date.Monday Date.Tuesday Date.Wednesday Date.Thursday Date.Friday Date.Saturday Date.Sunday

It can be learned that, the key.bin file in this embodiment includes data of the keyNode node in the Chinese language resource file and the English language resource file shown above, and only nodes at the last level in the resource file are stored. Parent nodes (for example, the nodes of address and Date) at an upper level of the last level are stored in a flat manner. In this way, a data structure in the key.bin file is converted from a two-level structure to a one-level structure. In addition, the two nodes of address and Date are not at the last level in the resource file and do not have corresponding values. Therefore, when the two nodes are not stored in the key.bin file after conversion, data search is not affected.

For example, based on the Chinese language resource file and the English language resource file shown above, for the A-value.bin file and the B-value.bin file corresponding to the Chinese language resource file after conversion and the English language resource file after conversion, refer to the A-value.bin file and the B-value.bin file shown in the foregoing embodiment. Details are not described herein again.

The electronic device 100 may obtain a corresponding value from a corresponding value.bin file based on a key.bin file.

Optionally, there is a mapping relationship between a key.bin file and a value.bin file. The electronic device 100 performs indexing based on a mapping relationship between a key.bin file and a value.bin file, to determine a value corresponding to each key. A manner of indexing the key.bin file and the value.bin file by the electronic device 100 is related to a preset data structure.

The following shows an example data structure. It should be noted that this does not constitute a limitation on the data structure in this embodiment of this application.

The key.bin file shown above is used as an example. A data structure of each node in the key.bin file may include an index of the key in a character string, a length of the key, a position of a corresponding value in value.bin, and a position of a next node in the key.bin file. The index of the key in the character string can be used to determine a start position of the key.

Specifically, for example, a data structure for the two nodes of HangZhou and ShangHai in the key.bin file includes:
Line 0: HangZhouShangHai... (a key character string)
Line 1: 0 8 0 2
Line 2: 8 8 13

From the line 1, 0 and 8 in the line 1 are used to determine a position of a key in the character string. That is, a key of an offset of eight bytes from the 0^{th} character is HangZhou. A position of a value corresponding to the key in value.bin is 0. A position of the next node is 2, that is, the line 2. In this case, the line 2 is indexed. In the line 2, 8 and 8 are used to determine a position of a key in the character string. That is, a key of an offset of eight bytes from the 8^{th} character is ShangHai. A position of a value corresponding to the key in value.bin is 1. A position of a next node is 3, that is, a line 3. In this way, the line 3 is indexed. Details are not described herein again.

Optionally, an index position (which is referred to as a line herein) of each key in the key.bin file may be obtained through hash calculation, that is, hashing is performed on the key to obtain a corresponding index position in the key.bin file.

Correspondingly, the A-value.bin file shown above is used as an example. The data structure of each node in the A-value.bin file may include an index of a value in a character string and a length of the value. The index of the value in the character string can be used to determine a start position of the value. For descriptions herein, refer to the related descriptions of the data structure of each node in the A-value.bin file. Details are not described herein again.

The foregoing uses the key.bin files as examples to illustrate two different data structures. It should be noted that versions of bin files (including a key.bin file and a value.bin file) obtained through conversion based on different data structures are different, and bin files of different versions may be mutually converted with a version conversion tool.

Step S406: The electronic device 100 completes conversion of the internationalization resource file, and completes installation of the first application.

In this way, in a process of running the first application, a corresponding internationalization resource file invoked by the electronic device 100 in a selected running environment is an after-conversion resource file.

In some embodiments, after conversion of the internationalization resource file is completed, the electronic device 100 may delete the before-conversion internationalization resource file, to save resources; or may retain the before-conversion internationalization resource file to adapt to subsequent conversion of data structure versions, so that the before-conversion internationalization resource file does not need to be downloaded again during version conversion to perform conversion to a latest version. Optionally, the electronic device 100 may determine, based on a memory resource of the electronic device 100. whether to delete the before-conversion internationalization resource file. If storage resources of the electronic device 100 are insufficient, the before-conversion internationalization resource file is deleted. If storage resources of the electronic device 100 are sufficient, the before-conversion internationalization resource file is retained.

In this embodiment of this application, during installation of the first application, internationalization resources in the entire installation package are parsed and converted, and keys and values are separately stored, so that pressure on a memory can be reduced during application resource file conversion and startup. In this embodiment of this application, a search mapping relationship between a key and a value is established, and a resource file structure is flat, so that a speed of searching for an internationalization target value can be improved, and time for parsing an internationalization resource is reduced during each startup of the first application or during application resource file conversion.

The foregoing step S401 to step S406 describe a process in which the electronic device 100 converts the internationalization resource file in the installation package of the first application during installation of the first application.

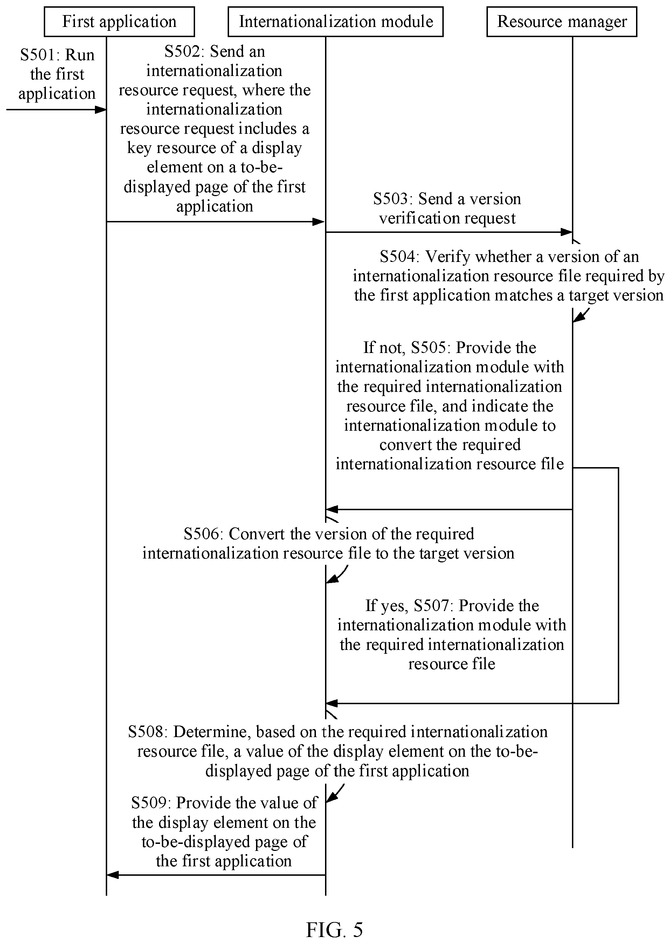

After the electronic device 100 installs the first application according to the foregoing step S401 to step S406, the electronic device 100 runs the first application, and the electronic device 100 searches for a corresponding internationalization resource file based on a selected operating environment. FIG. 5 shows a specific procedure of searching for an internationalization resource file. As shown in FIG. 5, the procedure includes the following steps.

Step S501: The electronic device 100 runs a first application.

The electronic device 100 runs the first application. Configuration information of the first application includes a current running environment of the first application. The electronic device 100 invokes a corresponding application resource to run the first application in the currently set running environment of the first application. In some embodiments, a user may select or switch a running environment of the first application.

Step S502: The first application of the electronic device 100 sends an internationalization resource request to an internationalization module. The internationalization resource request includes a key of a display element in a to-be-displayed interface of the first application.

The electronic device 100 runs the first application, and the electronic device 100 needs to load the display element on the to-be-displayed page. Based on the current running environment (for example, a Chinese running environment or an English running environment) of the electronic device 100, the first application of the electronic device 100 sends a corresponding resource request to the internationalization module, to request a required internationalization resource, where the internationalization resource request includes a key resource that needs to be searched for and that is of the display element. The key resource may be one key, or may be a plurality of keys of a display element in the to-be-displayed page.

In some embodiments, after the internationalization module of the electronic device 100 receives the internationalization resource request of the first application, the electronic device 100 detects whether the first application is currently run for the first time. Running for the first time herein may be running the first application by the electronic device 100 for the first time after the first application is installed, or may be running the first application by the electronic device 100 for the first time after the first application is updated, or may be running the first application by the electronic device 100 for the first time after a system of the electronic device 100 is updated. If yes, the electronic device 100 performs step S503 to step S507. If not, the electronic device 100 directly performs step S507.

Step S503: The internationalization module of the electronic device 100 sends a version verification request to a resource manager based on the received internationalization resource request.

The internationalization module of the electronic device 100 reads the configuration information of the first application, and determines the current running environment of the first application, that is, determines an internationalization resource file that needs to be invoked currently. After the internationalization module of the electronic device 100 receives the internationalization resource request, the electronic device 100 sends the version verification request to the resource manager, to verify whether a version of the internationalization resource file that currently needs to be invoked matches a target version.

Optionally, the target version is a version of a latest after-conversion internationalization resource file in the first application. A version of the internationalization resource file requested by the first application may be different from a version of the after-conversion internationalization resource file. For example, application update is performed on the first application after converting the internationalization resource file, and several resource files are added during the application update. In this way, when the internationalization resource file requested by the first application is a resource file in the several update resource files, a version of the resource file is different from the version of the after-conversion internationalization resource file. In this case, the internationalization module of the electronic device 100 sends the version verification request to the resource manager.

Optionally, the target version is a preset version of the international resource file in the electronic device 100. The version of the internationalization resource file requested by the first application may be different from the preset version in the electronic device 100. For example, the electronic device 100 updates the system, and updates the version of the adapted internationalization resource file to the target version. In this case, when the first application requests the internationalization resource file, the version of the resource file is different from the target version. In this case, the internationalization module of the electronic device 100 sends the version verification request to the resource manager.

Step S504: The resource manager of the electronic device 100 verifies whether the version of the internationalization resource file required by the internationalization resource request matches the target version.

If not, Step S505: The resource manager of the electronic device 100 provides the internationalization module with the required internationalization resource file, and indicates the internationalization module of the electronic device 100 to convert the required internationalization resource file.

Step S506: The internationalization module of the electronic device 100 converts the version of the required internationalization resource file to the target version.

For a conversion manner, refer to related descriptions of step S405. Details are not described herein again.

If yes, Step S507: The resource manager of the electronic device 100 provides the internationalization module with the required internationalization resource file. The version of the required internationalization resource file is the target version.

The foregoing step S503 to step S507 describes an implementation principle of version verification by the electronic device 100. Version verification is not limited to the foregoing manner. In some embodiments, after the internationalization module of the electronic device 100 receives the internationalization resource request, the electronic device 100 sends the version verification request to the resource manager, to verify whether a version of a current internationalization resource file in the resource manager matches the target version.

If the version of the internationalization resource file does not match the target version, the internationalization module of the electronic device 100 converts the unmatched version of the internationalization resource file in the resource manager to the target version. When it is determined that the version of the internationalization resource file in the resource manager matches the target version, the internationalization module of the electronic device 100 reads the configuration information of the first application, and determines the current running environment of the first application, that is, determines the internationalization resource file that needs to be invoked currently. Then, the internationalization module of the electronic device 100 obtains the required internationalization resource file from the resource manager.

Step S508: The internationalization module of the electronic device 100 determines, based on the internationalization resource request and the obtained required internationalization resource file, the value of the display element on the to-be-displayed page of the first application.

The internationalization resource request includes the key resource of the display element in the to-be-displayed page. The electronic device 100 determines a storage position of a key.bin file of the to-be-displayed page, and compares corresponding storage values (keys in the key.bin file) with an input value (the key resource) according to a specified rule. When a same value is found through comparison, the electronic device 100 finds a position of the input value (the key resource) in the key.bin file, and further determines an index value of a value corresponding to the input value (the key resource) in a value.bin file. The electronic device 100 finds, based on the index value, an internationalization result value corresponding to each input value (key resource) in the value.bin file.

There is a mapping rule between a key.bin file and a value.bin file. The mapping rule is related to data structures of the key.bin file and the value.bin file. For the data structures of the key.bin file and the value.bin file, refer to the descriptions related to step S405. Details are not described herein again.

Step S509: The internationalization module of the electronic device 100 provides the first application with the value corresponding to the display element on the to-be-displayed page of the first application.

The first application displays the to-be-displayed page based on the value.

When the user wants to switch an application running resource, for example, switch a display language from Chinese to English, a resource file invoked by the electronic device 100 is changed from a Chinese language resource file to an English language resource file, and the electronic device 100 may repeatedly perform step S502 to step S509, to invoke a required resource file.

The foregoing step S501 to step S508 describe a specific procedure in which the electronic device 100 searches for an internationalization resource file. The electronic device 100 directly loads a key and a value of an internationalization resource, so that pressure on an internationalization cache is reduced. In addition, for a device with insufficient memory, a corresponding resource can be stored in a cache with a low speed and poor performance. In this case, application running costs are reduced. In addition, when a plurality of instances are run, internationalization resources may not be cached simultaneously for a plurality of applications, and only a resource for an application that is being run is cached. Only a resource file needs to be reloaded for application switch. This can greatly reduce pressure of application caching on a memory.

In some implementations, the electronic device 100 downloads the first application from an application market, and obtains the installation package (the apk file) of the first application. The internationalization resource file in the installation package is a file with a separated key-value pair, including one key file and n value files. After installing the first application based on the installation package, the electronic device 100 runs the first application. The electronic device 100 searches for a corresponding internationalization resource file based on a selected running environment, directly loads a key and a value of an internationalization resource, and performs the step procedure shown in step S501 to step S508. Details are not described herein again.

In some implementations, the electronic device 100 may convert the internationalization resource file in an application compilation phase, to reduce the application installation package without increasing application installation time.

Specifically, before step S401, that is, before downloading the first application, the electronic device 100 compiles and packages the first application with a packaging and compilation module, to generate the apk file of the first application.

A compilation and packaging process is as follows.
1. Package a resource file. The resource file includes a Resource file (a file in res in a project, including a json file), an Assets file, an AndroidManifest.xml file, an Android basic class library (an Android.jar file), and the like. The electronic device 100 packages the resource file to generate an R.java file.
2. Compile project source code. A file including the project source code includes a source code file (the R.java file) and a library file (a .jar file). The electronic device 100 compiles the project source code to generate a corresponding class file.
3. Convert the class file to generate a classes.dex file.
4. Package the resource file (the R.java file), the class file (a dex file), and the like that are packaged to generate the installation package (the apk file) of the first application.

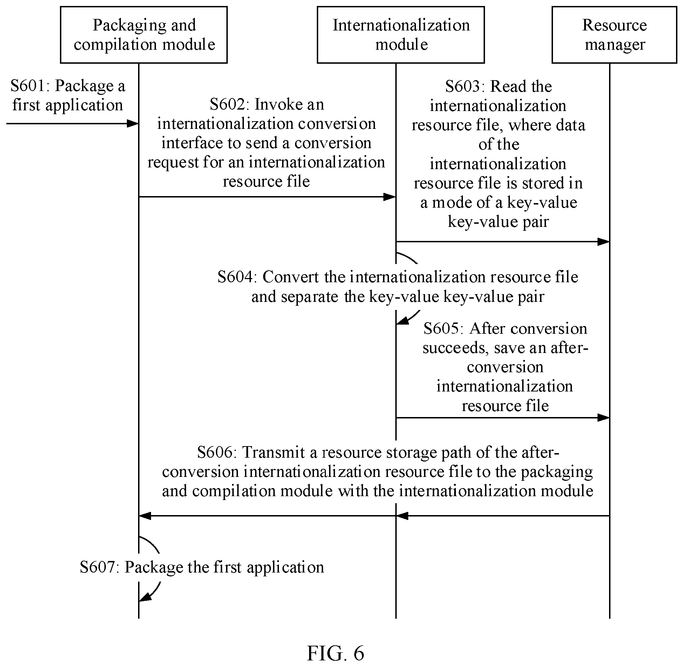

In a process in which the electronic device 100 compiles and packages the first application with the packaging and compilation module, the electronic device 100 converts the internationalization resource file. In this way, storage of duplicate keys can be reduced, and then the application installation package can be smaller. Optionally, in a process in which the electronic device 100 compiles and packages the first application with the packaging and compilation module, if the electronic device 100 detects that a data volume of the internationalization resource file is large, the electronic device 100 converts the internationalization resource file. Optionally, in a process in which the electronic device 100 compiles and packages the first application with the packaging and compilation module, the electronic device 100 outputs prompt information, and when a user confirmation instruction is received, the electronic device 100 converts the internationalization resource file. As shown in FIG. 6, the following steps are included.

Step S601: The first application receives an instruction for application packaging or application running.

The first application invokes a compilation tool to input an internationalization resource file path, and converts the internationalization resource file.

Step S602: The electronic device 100 invokes an internationalization conversion interface with the packaging and compilation module, and sends a conversion request for the internationalization resource file to the internationalization module, where the conversion request includes the internationalization resource file path.

Step S603: The internationalization module of the electronic device 100 reads the internationalization resource file from the resource manager based on the conversion request, where data of the internationalization resource file is stored in a mode of a key-value pair.

Step S604: The electronic device 100 converts the internationalization resource file, and separates the key-value pair.

For a conversion manner, refer to related descriptions of step S405. Details are not described herein again.

Step S605: After conversion succeeds, the internationalization module of the electronic device 100 saves an after-conversion internationalization resource file to the resource manager.

Step S606: The resource manager of the electronic device 100 transmits a resource storage path of the after-conversion internationalization resource file to the packaging and compilation module with the internationalization module.

Step S607: The packaging and compilation module compiles the after-conversion internationalization resource file based on the resource storage path, and packages a compiled file into a running file or the installation package of the first application, to complete packaging and compilation of the first application.

In this way, conversion of the internationalization resource file is completed in the packaging and compilation phase. Because the after-conversion internationalization resource file is stored with a key and a value separated, storage of duplicate keys can be reduced. In this way, the application installation package can be smaller, and efficiency of installing the first application can be improved. During subsequent running of the electronic device 100 or another electronic device, the first application may directly invoke the after-conversion internationalization resource file. In addition, a resource search process is implemented in the compilation or packaging phase. This can reduce time spent on running for the first time and internationalization resource file switch, reduce pressure of parsing the internationalization resource file on a memory, and reduce a probability of system breakdown or application abnormality caused by insufficient resource space.

In some implementations, the electronic device 100 converts a hierarchical structure of the internationalized resource file, and may specify, by retaining a keyword, a resource at a specific level for key/value mapping. Alternatively, a specified API (application programming interface, Application Programming Interface) is used for mapping of a key at a specific level. In this way, by converting a resource file at a specified level, a specified resource object can be obtained based on separated storage of a key and a value.

It can be learned that conversion of a resource file at a specified level affects caching of a key, but does not affect caching of a value. For example, the following resource file is defined.

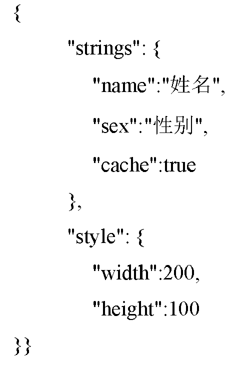

The resource file includes two levels. A first level includes two nodes: "strings" and "style", and a second level below the first level includes five nodes: "name", "sex", "cache", "width", and "height". A node at the second level is a child node of a node at the first level.

Optionally, the electronic device 100 may set a corresponding resource cache level through a specific API, for example, SetCacheLevel. If the second level is selected for caching, flat caching is performed on a parent node at a level above the second level (for example, the first level), and hierarchical caching is performed on a node at the second level and a node at a level below the second level. If the first level is selected for caching, both the node at the first level and the node at the second level are cached. The foregoing resource file is used as an example. If the electronic device 100 sets the corresponding resource cache level to the first level through SetCacheLevel, a corresponding key.bin file may include:
Strings name sex cache style width height

If the electronic device 100 sets the corresponding resource cache level to the second level through SetCacheLevel, a corresponding key.bin file may include:
strings.name strings. sex strings. cache style. width style. height

Optionally, the electronic device 100 may specify, based on a specific attribute, for example, cache, that a value at a current level is cached. For example, the foregoing resource file is used as an example. A cache value of the node of string is true, and the node of style does not have the attribute. In this case, flat caching is performed on the node of string, and hierarchical caching is performed on the node of style. A corresponding key.bin file may include:
strings. name strings. sex strings. cache stylewidth height

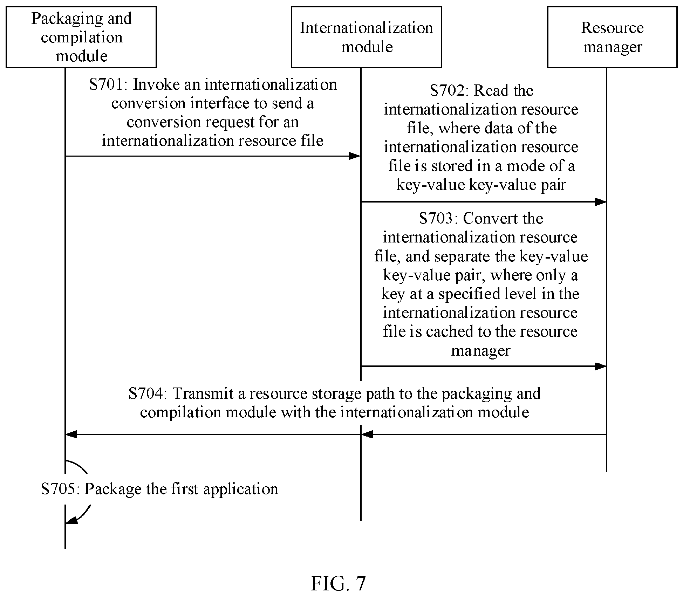

A corresponding resource conversion process is shown in FIG. 7.

Step S701: The electronic device 100 invokes an internationalization conversion interface with the packaging and compilation module, and sends a conversion request for an internationalization resource file to the internationalization module, where the conversion request includes an internationalization resource file path.

Step S702: The internationalization module of the electronic device 100 reads the internationalization resource file from the resource manager based on the conversion request, where data of the internationalization resource file is stored in a mode of a key-value pair.

Step S703: The electronic device 100 converts the internationalization resource file, and separates the key-value pair, where only a key at a specified level in the internationalization resource file is cached to the resource manager.

The internationalization module of the electronic device 100 converts the internationalization resource file. The internationalization module of the electronic device 100 separates "key"-"value" key-value pairs of a plurality of resource files in the internationalization resource file, saves keys in the plurality of resource files as one file, and removes a duplicate key.

For caching a key, the electronic device 100 caches a key of a node at a specified level based on a preset resource cache level API or a preset attribute, and if the node at the specified level further includes a child node, separately caches a key of the corresponding child node and establishes a mapping relationship between the corresponding child node and the parent node.

The electronic device 100 performs flat caching on a key at a level above a specified level, performs hierarchical caching on a cache node and a child node of the cache node in different files, and establishes a mapping relationship by using a corresponding structure. For example, a parent node of a child node and an offset position of a sibling node are recorded, so that a structure of the corresponding child node is saved.

In some embodiments, if there is no level with a preset attribute or no preset resource cache level, a last level is cached by default.

Based on this cache mode, when key indexing is performed, the internationalization module searches for a mapping relationship of each level until a corresponding level is found, corresponding child nodes are combined into an object and returned to a developer. If the search fails at the last level, a failure result is returned. For example, a first search is string.name. If the search fails, whether a mapping position corresponding to string exists is checked, and then a corresponding child node is obtained through comparison.

Step S703 describes a process of caching a key at a specified level and generating a key.bin file. For descriptions of caching a value, refer to the related descriptions of the foregoing step S405. Details are not described herein again.

Step S704: The resource manager of the electronic device 100 transmits a resource storage path of an after-conversion internationalization resource file to the packaging and compilation module with the internationalization module.

Step S705: The packaging and compilation module compiles the after-conversion internationalization resource file, and packages a compiled file into a running file or the installation package of the first application.

In this embodiment of this application, multi-level resource file caching can be supported, and a resource file at a specified level can be cached, so that customization can be better performed based on a user requirement. In this way, a resource file at a specified level can be obtained based on separated storage of a key and a value. In addition, in this embodiment of this application, through offline resource file compilation, resource space occupied by an internationalization resource can be estimated in advance. When the resource space is insufficient, a corresponding resource file may not be loaded, to avoid a risk of system breakdown caused by excessive pressure on a memory. At the same time, by directly loading a conversion file to a second-level cache, pressure on a memory can be reduced during running.

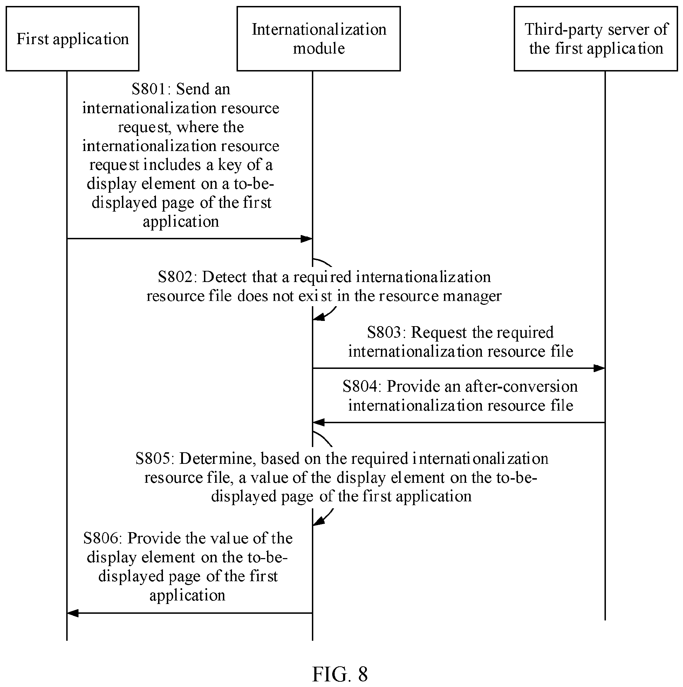

In some implementations, the electronic device 100 obtains the internationalization resource file of the first application through a third-party server of the first application. In this case, the electronic device 100 may download the internationalization resource file of the application based on different regions, thereby reducing consumption of file downloading or transmission. That is, when the first application is to search for a required internationalization resource file, the first application may obtain the internationalization resource file through the third-party server of the first application. As shown in FIG. 8, FIG. 8 shows a procedure in which the first application of the electronic device 100 searches for an internationalization resource file.

Step S801: The first application of the electronic device 100 sends an internationalization resource request to the internationalization module. The internationalization resource request includes a key resource of a display element in a to-be-displayed interface of the first application.

After the electronic device 100 downloads and installs the first application, the electronic device 100 runs the first application, and the first application sends the internationalization resource request to the internationalization module.

In some embodiments, if the first application downloaded by the electronic device 100 is a first application for a specified region, an installation package of the first application includes an internationalization resource file for the specified region. Conversion for separated storage of a key and a value is performed on the internationalization resource file during installation, or conversion for separated storage of a key and a value is performed during packaging and compilation.

Step S802: Based on the internationalization resource request, the internationalization module of the electronic device 100 detects that the required internationalization resource file does not exist in the resource manager.

Step S803: The electronic device 100 requests, based on a communications module, to obtain the required internationalization resource file from a third-party server of the first application.

Step S804: The electronic device 100 obtains, based on the communication module, a required after-conversion internationalization resource file.

In some embodiments, the third-party server of the first application receives the request of the electronic device 100, performs conversion for separated storage of a key and a value on the internationalization resource file required by the electronic device 100, and then provides the electronic device 100 with the internationalization resource file.

In some embodiments, the third-party server of the first application receives the request of the electronic device 100, and provides the electronic device 100 with the internationalization resource file required by the electronic device 100. The electronic device 100 obtains the internationalization resource file, and performs conversion for separated storage of a key and a value. For a specific conversion manner, refer to related descriptions of step S405. Details are not described herein again.

Step S805: The internationalization module of the electronic device 100 determines, based on the internationalization resource request and the required after-conversion internationalization resource file, a value of the display element on the to-be-displayed page of the first application.

Step S806: The internationalization module of the electronic device 100 provides the first application with the value corresponding to the display element on the to-be-displayed page of the first application.

In some embodiments, after step S804 and before step S805, the internationalization module of the electronic device 100 may further perform version verification on the required after-conversion internationalization resource file. For specific descriptions of version verification, refer to related descriptions of step S503 to step S506. Details are not described herein again.

In this embodiment of this application, internationalization resource files of the application are downloaded based on different regions, so that consumption of file download or transmission can be reduced. If the application is run on a device with limited resources, space occupied by an internationalization resource may be determined before loading the internationalization resource, and only the required internationalization resource file is downloaded. In this way, application abnormality or system abnormality caused by excessive occupation of the internationalization resource of the application can be avoided.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the procedures of the methods in the embodiments may be implemented by a computer program instructing related hardware. The program may be stored in a computer-readable storage medium. When the program is run, the procedures of the method embodiments are performed. The foregoing storage medium includes any medium that can store program code, for example, a ROM, a random access memory RAM, a magnetic disk, or an optical disc.

## Claims

1. A resource search method, wherein the method comprises:
installing (S402), by the electronic device, the first application based on an installation package of the first application, wherein the installation package of the first application comprises a first resource file and a second resource file, data of the first resource file and the second resource file is stored in a mode of a key-value pair, the first resource file provides the first running environment, and the second resource file provides the second running environment;
converting (S405), by the electronic device, the first resource file and the second resource file to a key file, a first value file, and a second value file, wherein the key file comprises keys of the first resource file and the second resource file, the first value file comprises a value of the first resource file, the second value file comprises a value of the second resource file;
running (S501), by an electronic device, a first application, wherein a current running environment of the first application is the first running environment;
determining (S502), by the electronic device, a first key of a display element on a first page of the first application;
searching (S508), by the electronic device based on the first running environment, the first value file for a first value corresponding to the first key;
displaying (S509), by the electronic device, the first page based on the first value of the display element on the first page;
when the electronic device receives a resource switch request, wherein the resource switch request is used to switch from the first running environment to the second running environment;
in response to the resource switch request, searching (S508), by the electronic device based on the second running environment, the second value file for a second value corresponding to the first key; and
displaying (S509), by the electronic device, the first page based on the second value of the display element on the first page, wherein
a first mapping relationship exists between the key file and the first value file, and a second mapping relationship exists between the key file and the second value file.

2. The method according to claim 1, wherein the searching, by the electronic device based on the current first running environment, the first value file for a first value corresponding to the first key comprises:
finding, by the electronic device, a position of the first key in the key file, and further obtaining, based on the first mapping relationship, an index value of a value corresponding to the first key in the first value file; and
finding, by the electronic device, the first value in the first value file based on the index value.

3. The method according to claim 1, wherein before the running, by an electronic device, a first application, the method further comprises:
converting, by the electronic device, a first resource file and a second resource file to a key file, the first value file, and the second value file with a packaging and compilation tool, wherein data of the first resource file and the second resource file is stored in a mode of a key-value pair, the first resource file provides the first running environment, the second resource file provides the second running environment, the key file comprises keys of the first resource file and the second resource file, the first value file comprises a value of the first resource file, the second value file comprises a value of the second resource file, a first mapping relationship exists between the key file and the first value file, and a second mapping relationship exists between the key file and the second value file; and
generating, by the electronic device, an installation package of the first application, wherein the installation package of the first application comprises the key file, the first value file, and the second value file.

4. The method according to claim 1, wherein before the running, by an electronic device, a first application, the method further comprises:
obtaining, by the electronic device, an installation package of the first application, wherein the installation package of the first application comprises a key file, the first value file, and the second value file.

5. The method according to claim 1, wherein the searching, by the electronic device based on the current first running environment, a first value file for a first value corresponding to the first key comprises:
obtaining, by the electronic device, the first value file from a server of the first application based on the current first running environment; and
searching, by the electronic device, the first value file for the first value corresponding to the first key.

6. The method according to any one of claims 1 to 5, wherein a data structure level of the first resource file is a first level, a data structure level of the key file is a second level, and a quantity of layers at the second level is less than a quantity of layers at the first level.

7. The method according to any one of claims 1 to 6, wherein a data structure of each key in the key file comprises: an index of the key in a character string, a length of the key, a position of a corresponding value in value.bin, and an index position of a next key node in the key file.

8. An electronic device, comprising one or more processors and one or more memories, wherein the one or more memories are configured to store computer program code, the computer program code comprises computer instructions, and when the computer instructions are run on the processor, the electronic device is enabled to perform the method according to any one of claims 1 to 7.

9. A computer-readable medium, configured to store one or more programs, wherein the one or more programs are configured to be executed by one or more processors, the one or more programs comprise instructions, and the instructions are used to perform the method according to any one of claims 1 to 7.

## Patentansprüche

1. Verfahren zur Suche von Ressourcen, wobei das Verfahren Folgendes umfasst:
Installieren (S402), durch das elektronische Gerät, der ersten Anwendung basierend auf einem Installationspaket der ersten Anwendung, wobei das Installationspaket der ersten Anwendung eine erste Ressourcendatei und eine zweite Ressourcendatei umfasst, die Daten der ersten Ressourcendatei und der zweiten Ressourcendatei im Modus eines Schlüssel-Wert-Paares gespeichert sind, die erste Ressourcendatei die erste Laufzeitumgebung bereitstellt und die zweite Ressourcendatei die zweite Laufzeitumgebung bereitstellt;
Konvertieren (S405), durch das elektronische Gerät, der ersten Ressourcendatei und der zweiten Ressourcendatei in eine Schlüsseldatei, eine erste Wertedatei und eine zweite Wertedatei, wobei die Schlüsseldatei Schlüssel der ersten Ressourcendatei und der zweiten Ressourcendatei umfasst, die erste Wertedatei einen Wert der ersten Ressourcendatei umfasst und die zweite Wertedatei einen Wert der zweiten Ressourcendatei umfasst;
Ausführen (S501), durch ein elektronisches Gerät, einer ersten Anwendung, wobei eine aktuelle Ausführungsumgebung der ersten Anwendung die erste Ausführungsumgebung ist;
Bestimmen (S502), durch das elektronische Gerät, einer ersten Taste eines Anzeigeelements auf einer ersten Seite der ersten Anwendung;
Suchen (S508), durch das elektronische Gerät basierend auf der ersten Laufzeitumgebung, der ersten Wertedatei für einen ersten Wert entsprechend dem ersten Schlüssel;
Anzeigen (S509), durch das elektronische Gerät, der ersten Seite basierend auf dem ersten Wert des Anzeigeelements auf der ersten Seite;
wenn das elektronische Gerät eine Ressourcenwechselanforderung empfängt, wobei die Ressourcenwechselanforderung dazu verwendet wird, von der ersten Laufzeitumgebung zur zweiten Laufzeitumgebung zu wechseln;
als Reaktion auf die Ressourcenwechselanforderung, Suchen (S508), durch das elektronische Gerät basierend auf der zweiten Laufzeitumgebung, der zweiten Wertedatei für einen zweiten Wert entsprechend dem ersten Schlüssel; und
Anzeigen (S509), durch das elektronische Gerät, der ersten Seite basierend auf dem zweiten Wert des Anzeigeelements auf der ersten Seite, wobei
eine erste Abbildungsbeziehung zwischen der Schlüsseldatei und der ersten Wertedatei besteht und eine zweite Abbildungsbeziehung zwischen der Schlüsseldatei und der zweiten Wertedatei besteht.

2. Verfahren nach Anspruch 1, wobei das Suchen, durch das elektronische Gerät basierend auf der aktuellen ersten Laufzeitumgebung, der ersten Wertedatei für einen ersten Wert entsprechend dem ersten Schlüssel Folgendes umfasst:
Finden, durch das elektronische Gerät, einer Position des ersten Schlüssels in der Schlüsseldatei und ferner Erhalten, basierend auf der ersten Abbildungsbeziehung, eines Indexwertes eines Wertes entsprechend dem ersten Schlüssel in der ersten Wertedatei; und
Finden, durch das elektronische Gerät, des ersten Wertes in der ersten Wertedatei basierend auf dem Indexwert.

3. Verfahren nach Anspruch 1, wobei das Verfahren vor dem Ausführen, durch ein elektronisches Gerät, einer ersten Anwendung Folgendes umfasst:
Konvertieren, durch das elektronische Gerät, einer ersten Ressourcendatei und einer zweiten Ressourcendatei in eine Schlüsseldatei, die erste Wertedatei und die zweite Wertedatei mit einem Paketierungs- und Kompilierungswerkzeug, wobei Daten der ersten Ressourcendatei und der zweiten Ressourcendatei in einem Modus eines Schlüssel-Wert-Paares gespeichert sind, die erste Ressourcendatei die erste Laufumgebung bereitstellt, die zweite Ressourcendatei die zweite Laufumgebung bereitstellt, die Schlüsseldatei Schlüssel der ersten Ressourcendatei und der zweiten Ressourcendatei umfasst, die erste Wertedatei einen Wert der ersten Ressourcendatei umfasst, die zweite Wertedatei einen Wert der zweiten Ressourcendatei umfasst, eine erste Abbildungsbeziehung zwischen der Schlüsseldatei und der ersten Wertedatei besteht und eine zweite Abbildungsbeziehung zwischen der Schlüsseldatei und der zweiten Wertedatei besteht; und
Erzeugen, durch das elektronische Gerät, eines Installationspakets der ersten Anwendung, wobei das Installationspaket der ersten Anwendung die Schlüsseldatei, die erste Wertedatei und die zweite Wertedatei umfasst.

4. Verfahren nach Anspruch 1, wobei das Verfahren vor dem Ausführen, durch ein elektronisches Gerät, einer ersten Anwendung Folgendes umfasst:
Erhalten, durch das elektronische Gerät, eines Installationspakets der ersten Anwendung, wobei das Installationspaket der ersten Anwendung eine Schlüsseldatei, die erste Wertedatei und die zweite Wertedatei umfasst.

5. Verfahren nach Anspruch 1, wobei das Suchen, durch das elektronische Gerät basierend auf der aktuellen ersten Laufzeitumgebung, einer ersten Wertedatei für einen ersten Wert entsprechend dem ersten Schlüssel Folgendes umfasst:
Erhalten, durch das elektronische Gerät, der ersten Wertedatei von einem Server der ersten Anwendung basierend auf der aktuellen ersten Ausführungsumgebung; und
Suchen, durch das elektronische Gerät, der ersten Wertedatei für den ersten Wert entsprechend dem ersten Schlüssel.

6. Verfahren nach einem der Ansprüche 1 bis 5, wobei eine Datenstrukturebene der ersten Ressourcendatei eine erste Ebene ist, eine Datenstrukturebene der Schlüsseldatei eine zweite Ebene ist und eine Menge von Schichten auf der zweiten Ebene kleiner ist als eine Menge von Schichten auf der ersten Ebene.

7. Verfahren nach einem der Ansprüche 1 bis 6, wobei eine Datenstruktur jedes Schlüssels in der Schlüsseldatei Folgendes umfasst: einen Index des Schlüssels in einer Zeichenkette, eine Länge des Schlüssels, eine Position eines entsprechenden Wertes in value.bin und eine Indexposition eines nächsten Schlüsselknotens in der Schlüsseldatei.

8. Elektronisches Gerät, umfassend einen oder mehrerer Prozessoren und einen oder mehrere Speicher, wobei der eine oder die mehreren Speicher zum Speichern von Computerprogrammcode konfiguriert sind, wobei der Computerprogrammcode Computeranweisungen umfasst, und, wenn die Computeranweisungen auf dem Prozessor ausgeführt werden, die elektronische Vorrichtung in die Lage versetzt wird, das Verfahren nach einem der Ansprüche 1 bis 7 durchzuführen.

9. Computerlesbares Medium, das so konfiguriert ist, dass es ein oder mehrere Programme speichert, wobei das eine oder die mehreren Programme so konfiguriert sind, dass sie von einem oder mehreren Prozessoren ausgeführt werden, das eine oder die mehreren Programme Anweisungen umfassen und die Anweisungen verwendet werden, um das Verfahren nach einem der Ansprüche 1 bis 7 durchführen.

## Revendications

1. Procédé de recherche de ressources, dans lequel le procédé comprend :
l'installation (S402), par le dispositif électronique, de la première application sur la base d'un package d'installation de la première application, dans lequel le package d'installation de la première application comprend un premier fichier de ressources et un second fichier de ressources, les données du premier fichier de ressources et du second fichier de ressources sont stockées dans un mode d'une paire clé-valeur, le premier fichier de ressources fournit le premier environnement d'exécution, et le second fichier de ressources fournit le second environnement d'exécution ;
la conversion (S405), par le dispositif électronique, du premier fichier de ressources et du second fichier de ressources en un fichier de clé, un premier fichier de valeur, et un second fichier de valeur, dans lequel le fichier de clé comprend les clés du premier fichier de ressources et du second fichier de ressources, le premier fichier de valeur comprend une valeur du premier fichier de ressources, le second fichier de valeur comprend une valeur du second fichier de ressources ;
l'exécution (S501), par un dispositif électronique, d'une première application, dans lequel un environnement d'exécution actuel de la première application est le premier environnement d'exécution ;
la détermination (S502), par le dispositif électronique, d'une première clé d'un élément d'affichage sur une première page de la première demande ;
la recherche (S508), par le dispositif électronique sur la base du premier environnement d'exécution, du premier fichier de valeur pour une première valeur correspondant à la première clé ;
l'affichage (S509), par le dispositif électronique, de la première page sur la base de la première valeur de l'élément d'affichage sur la première page ;
lorsque le dispositif électronique reçoit une demande de changement de ressource, dans lequel la demande de changement de ressource est utilisée pour passer du premier environnement d'exécution au second environnement d'exécution ;
en réponse à la demande de changement de ressource, la recherche (S508), par le dispositif électronique sur la base du second environnement d'exécution, du second fichier de valeur pour une seconde valeur correspondant à la première clé ; et
l'affichage (S509), par le dispositif électronique, de la première page sur la base de la seconde valeur de l'élément d'affichage sur la première page, dans lequel
une première relation de correspondance entre le fichier de clé et le premier fichier de valeur, et une seconde relation de correspondance existe entre le fichier de clé et le second fichier de valeur.

2. Procédé selon la revendication 1, dans lequel la recherche, par le dispositif électronique sur la base du premier environnement d'exécution actuel, du premier fichier de valeur pour une première valeur correspondant à la première clé comprend :
le fait de trouver, par le dispositif électronique, une position de la première clé dans le fichier de clé, et obtenir également, sur la base de la première relation de correspondance, une valeur d'index d'une valeur correspondant à la première clé dans le premier fichier de valeur ; et
le fait de trouver, par le dispositif électronique, la première valeur dans le premier fichier de valeur sur la base de la valeur d'index.

3. Procédé selon la revendication 1, dans lequel avant l'exécution, par un dispositif électronique, d'une première application, le procédé comprend également :
la conversion, au moyen d'un dispositif électronique, d'un premier fichier de ressources et d'un second fichier de ressources en un fichier de clé, le premier fichier de valeur, et le second fichier de valeur avec un outil d'empaquetage et de compilation, dans lequel les données du premier fichier de ressources et du second fichier de ressources sont stockées dans un mode d'une paire clé-valeur, le premier fichier de ressources fournit le premier environnement d'exécution, le second fichier de ressources fournit le second environnement d'exécution, le fichier de clé comprend les clés du premier fichier de ressources et du second fichier de ressources, le premier fichier de valeur comprend une valeur du premier fichier de ressources, le second fichier de valeur comprend une valeur du second fichier de ressources, une première relation de correspondance existe entre le fichier de clé et le premier fichier de valeur, et une seconde relation de correspondance existe entre le fichier de clé et le second fichier de valeur ; et
la génération, par le dispositif électronique, d'un package d'installation de la première application dans lequel le package d'installation de la première application comprend le fichier de clé, le premier fichier de valeur, et le second fichier de valeur.

4. Procédé selon la revendication 1, dans lequel avant l'exécution, au moyen d'un dispositif électronique, d'une première application, le procédé comprend également :
l'obtention, par le dispositif électronique, d'un package d'installation de la première application, dans lequel le package d'installation de la première application comprend un fichier de clé, le premier fichier de valeur, et le second fichier de valeur.

5. Procédé selon la revendication 1, dans lequel la recherche, par le dispositif électronique sur la base du premier environnement d'exécution actuel, d'un premier fichier de valeur pour une première valeur correspondant à la première clé comprend :
l'obtention, par le dispositif électronique, du premier fichier de valeur à partir d'un serveur de la première application sur la base du premier environnement d'exécution actuel ; et
la recherche, au moyen du dispositif électronique, du premier fichier de valeur pour la première valeur correspondant à la première clé.

6. Procédé selon l'une quelconque des revendications 1 à 5, dans lequel un niveau de structure de données du premier fichier de ressources est un premier niveau, un niveau de structure de données du fichier de clé est un second niveau, et un nombre de couches au second niveau est inférieur à un nombre de couches au premier niveau.

7. Procédé selon l'une quelconque des revendications 1 à 6, dans lequel une structure de données de chaque clé dans le fichier de clé comprend : un index de la clé dans une chaîne de caractères, une longueur de la clé, une position d'une valeur correspondante dans value.bin, et une position d'index d'un nœud de clé suivant dans le fichier de clés.

8. Dispositif électronique, comprenant un ou plusieurs processeurs et une ou plusieurs mémoires, dans lequel les une ou plusieurs mémoires sont configurées pour stocker un code de programme informatique, le code de programme informatique comprend des instructions informatiques, et lorsque les instructions informatiques sont exécutées sur le processeur, le dispositif électronique est activé pour réaliser le procédé selon l'une quelconque des revendications 1 à 7.

9. Support lisible par ordinateur, configuré pour stocker un ou plusieurs programmes, dans lequel les un ou plusieurs programmes sont configurés pour être exécutés par un ou plusieurs processeurs, les un ou plusieurs programmes comprennent des instructions, et les instructions sont utilisées pour réaliser le procédé selon l'une quelconque des revendications 1 à 7.
